# EUROPEAN PATENT SPECIFICATION

(11) **EP 2 358 230 B1**
(45) Date of publication and mention of the grant of the patent: **17.07.2013**
(21) Application number: 09764485.0
(22) Date of filing: 24.11.2009
(51) Int. Cl.: A44B 11/25, B60R 22/10

(54) **A SAFETY BELT BUCKLE AND ASSEMBLY FOR A VEHICLE CHILD SEAT**
SICHERHEITSGURTSCHNALLE UND ANORDNUNG FÜR EINEN FAHRZEUGKINDERSITZ
BOUCLE DE CEINTURE DE SÉCURITÉ ET ENSEMBLE POUR SIÈGE D'ENFANT DE VÉHICULE

(30) Priority: 24.11.2008 SE 0850094
(43) Date of publication of application: 24.08.2011
(73) Proprietor: Holmbergs Childsafety Holding AB, 302 45 Halmstad (SE)
(72) Inventor: WESTMAN, Johan, S-332 31 Gislaved (SE)
(74) Representative: Valea AB
(86) International application number: PCT/EP2009/065777
(87) International publication number: WO 2010/058035

(56) References cited:
- EP-A- 0 630 778
- EP-A- 1 380 464
- EP-A- 1 616 509

## Description

### Technical Field

The present invention relates to safety belt buckles for seats having a crotch pad.

The invention is especially concerned with, but not limited to, use in a child seat, where the child can be strapped to the seat by means of three belts, one over each shoulder, and one between the legs of the child.

### Background

Such known seats have a protrusion, for example a crotch pad, in the seating area adjacent the attachment region between the safety belt buckle and the seat, see for instance EP-A-1,547,484. The crotch pad is positioned in the seating area of the seat and may be detachable from the seat or fixedly attached to the seat. Such seats are used for securing a person in a vehicle in order to prevent injuries to the person in case of an accident.

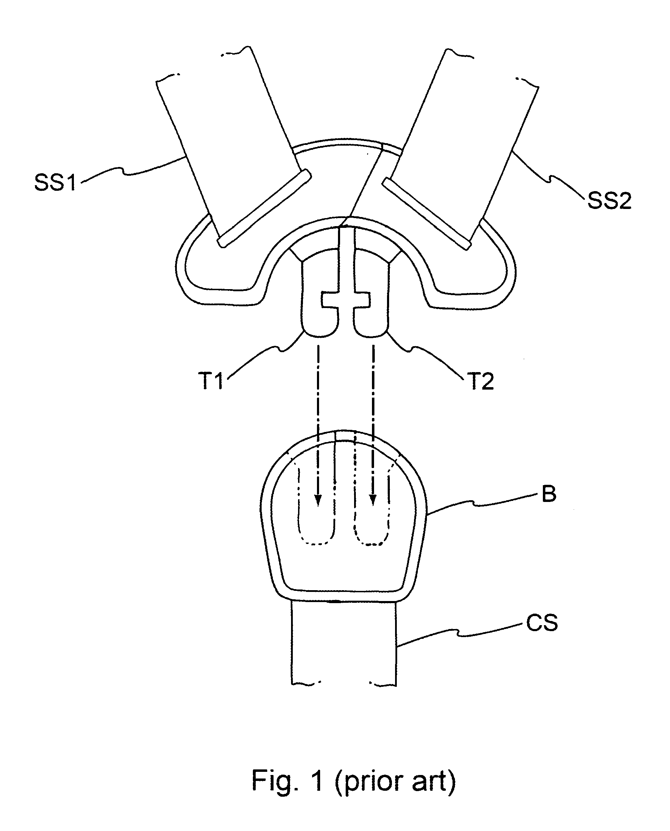

Figs 1-3 shows a prior-art safety belt buckle B for a vehicle child seat according to prior art, and how it operates. The safety belt buckle B is attached to a first end of a crotch strap CS. A second end of the crotch strap CS is attached to the seating area of the vehicle child seat. When a child is secured in the child seat, the child is placed with its back against the back support of the child seat and the crotch strap CS between the legs of the child in its crotch region. The safety belt buckle is then located somewhere by the belly or chest of the child, depending on the length of the child and adjustment of the crotch strap CS. In order for the child to be secured comfortably, a crotch pad P extends from the seating area, substantially protruding from a point in the seating area of the vehicle child seat next to the attachment point of the crotch strap, such that the crotch pad is located between the child and both the crotch strap CS and the safety belt buckle B.

After the child has been seated in the child seat, the safety belt buckle B is lockingly engaged to a first tongue T1 and a second tongue T2. The first tongue T1 and second tongue T2 are attached to a first end of a first shoulder strap SS1 and a first end of a second shoulder strap SS2, respectively. The second ends of the first and second shoulder straps SS1, SS2 are attached to the back support of the child seat so that they may be pulled over the shoulders of the child and brought down over the chest of the child so that the safety belt buckle and the first and second tongue T1, T2 lockingly engage.

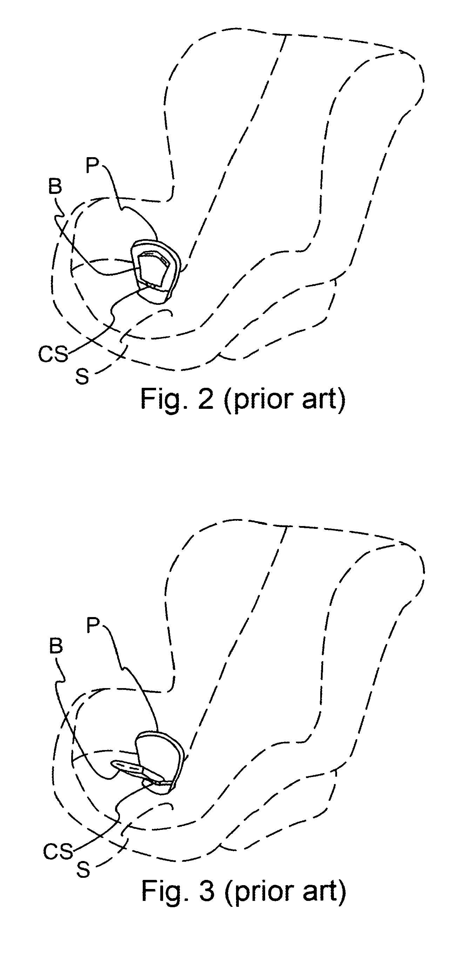

Fig. 2 shows a prior-art safety belt buckle B and a crotch pad P being attached to, or substantially protruding from, the seating area S of a vehicle child seat.

It is important that the safety belt buckle B is correctly positioned in relation to the crotch pad P.

Especially, an inadvertent positioning may exceptionally occur when the child is placed in the child seat in a hurry, or if the child is struggling at the time of placement.

Fig. 3 illustrates how the safety belt buckle B and the crotch pad P are attached to the seating area S of the child seat, but where the buckle B is substantially separated from the crotch pad P. This may be the result if the child e.g. sits on the crotch pad P, or the crotch pad may be misplaced in another way. The safety belt buckle B may then potentially harm the child, since its substantially hard exterior is in direct contact with the crotch of the child.

Another prior-art child seat is shown in EP-A-1,380,464. In conjunction with this seat, a crotch pad is shown as comprising a buckle housing. Further, there is shown a guiding flap which can be positioned in a region in front of the crotch pad for guiding a belt in order to enable the crotch pad to be kept mounted to the seat.

Safety belt buckles according to prior art suffer from one or more disadvantages with regard to function, security or cost for manufacture and/or assembly.

EP0,630,778 A and EP 1,616,509 both disclose a vehicle children seat having a belt buckle and a crotch pad. The crotch pad is attached to the belt and the buckle in an enveloping manner. In the former publication, the cushion is adapted to be self sustained to keep the buckle in an up raised manner, while in the latter publication, the buckle is kept in an up raised manner by means of an elastic plate.

### Summary

The object of the invention is to provide a safety belt buckle which is improved over prior art. This is obtained by a safety belt buckle for use with a seat having a crotch pad. Further, the buckle comprises a body having a surface provided with attachment means for detachable attachment of the buckle to the crotch pad.

An advantage of this structure is that the crotch pad, when attached to the safety belt buckle, will stay in place in relation to the buckle. This may prevent injuries to a person who is to be secured by means of said buckle, since the relatively rigid exterior of the buckle will be kept at a distance from the crotch of the person by means of the crotch pad. Furthermore, when the buckle and crotch pad are attached to each other, the crotch pad has a well defined position adjacent the buckle, effectively keeping the crotch pad away from the seating area. This brings an advantage in that a person being seated into the seat will not be inadvertently seated on top of the crotch pad, thereby avoiding unnecessary hassle during seating of a person into said seat. Hence, the buckle is easy to use, since the crotch pad is not dislocated.

According to an aspect, the attachment means comprises hook-and-loop fabric. This brings an advantage in that the buckle can easily be attached to and detached from the crotch pad.

In another aspect, the attachment means comprises a snap fastener which brings an advantage in that the buckle is convenient to attach to and detach from the crotch pad.

Preferably, the attachment means is integrated with the body. This brings the advantage that the attachment means cannot easily fall off the body.

According to an embodiment, the attachment means is attached to the body which brings an advantage in that the attachment means can easily be provided on standard buckles without any substantial changes, such as tooling of plastic molds.

Preferably, the crotch pad is pivotally attached to the body. This brings an advantage in that it is easier to seat a person in the seat.

In an aspect of the invention, a safety belt assembly is provided which comprises at least one buckle and a plurality of belts configured to be connected to said buckle.

According to yet another aspect of the invention, a vehicle seat, preferably a child seat, is provided which comprises a safety belt assembly as defined above.

When such a seat is used, the buckle and crotch pad used in the above defined assembly, are attached to each other. Hence, the vehicle seat is easy to use since the crotch pad is not easily dislocatable by mistake. This also makes the vehicle seat safe, since the crotch pad is correctly positioned relatively the buckle in order to protect the seated person from the buckle.

Further embodiments and advantages will be described in the following.

### Brief Description of the Drawings

Embodiments of the invention will be described in further detail below with reference to the accompanying drawings, in which
Fig. 1 is an illustration of a safety belt buckle according to prior art;
Fig. 2 is an illustration of a safety belt buckle according to prior art, attached to a child safety seat;
Fig. 3 is an illustration of the buckle of Fig. 2 showing a defect in the prior art;
Fig. 4 is an isometric view from the backside of a safety belt buckle according to one embodiment of the invention;
Fig. 5 is an isometric view from the front of the buckle of Fig. 4, but with a crotch pad attached;
Fig. 6 is a side view of the buckle of Fig. 5 shown attached to the crotch pad, and
Fig. 7 is a side view of the buckle of Fig. 5 shown detached from to the crotch pad.

### Detailed Description

Fig. 3 shows a prior-art safety belt buckle B for a seat which has a protrusion or crotch pad P in the seating area S which coincides with an attachment region between the safety belt buckle and the seat. The crotch pad P is positioned between the safety belt buckle and a person positioned in the seat and held in place in the seat by means of the belt buckle, with both the crotch pad and the buckle between the legs.

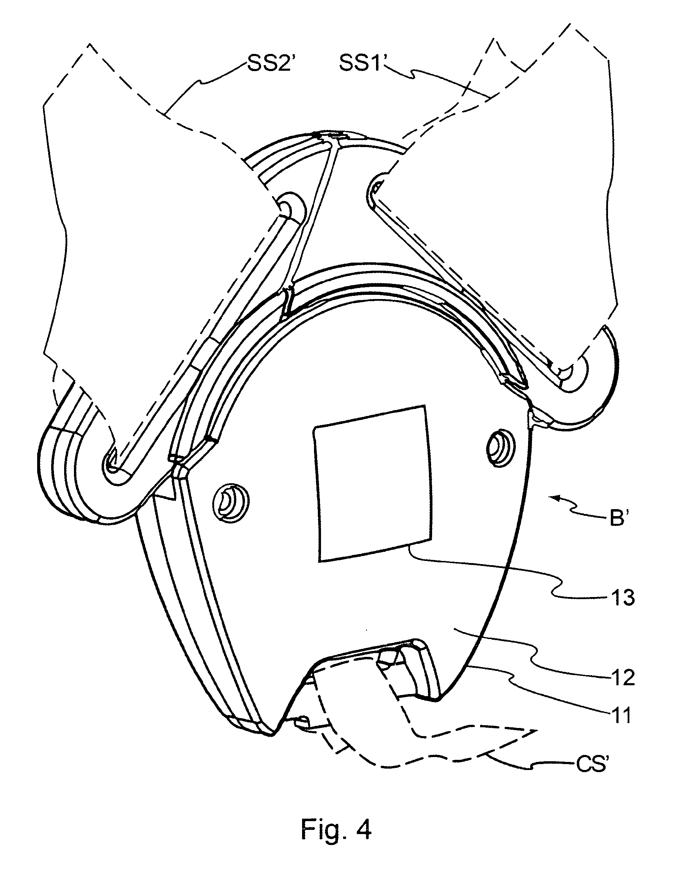

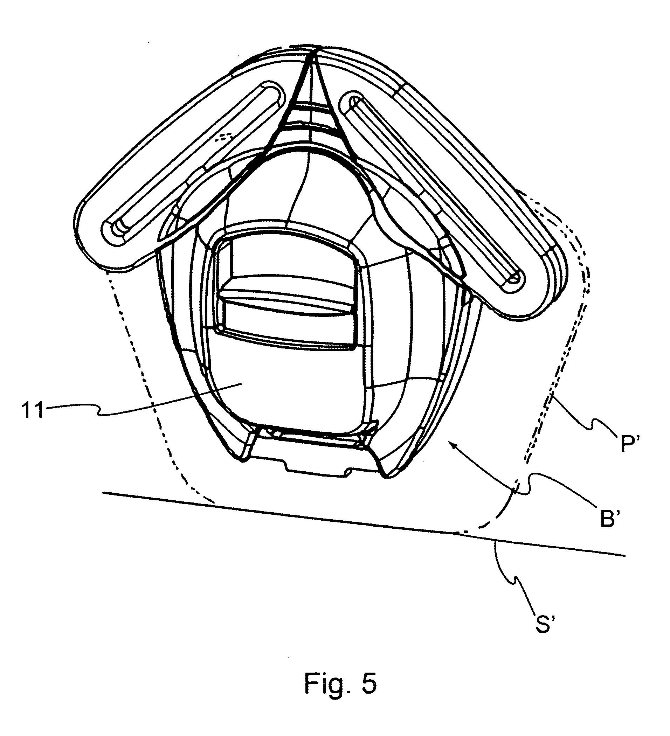

Figs 4-7 show a buckle B' in accordance with an embodiment of the invention used in a vehicle seat, preferably a child seat S'. The buckle B' has a housing or body 11 with a surface 12. When in use, the surface 12 of the buckle body 11 faces a protrusion or crotch pad P'. The body 11 has an attachment means 13 for detachable attachment of the buckle B' to the crotch pad P' of the seat S'. Fig. 4 also illustrates belts SS1', SS2' and CS' connected to the buckle B' in a known manner not further described herein.

An advantage of this embodiment is that the crotch pad P', when attached to the safety belt buckle B', will stay in place relatively the buckle B'. This may prevent harm to the person using the buckle B', since its rigid exterior will not directly contact with the crotch of the person. Furthermore, since the buckle B' and crotch pad P' are attached, the buckle B' is easy to use since the crotch pad P' is not dislocated. The attachment means 13 may comprise any kind of attachment means suitable for attaching the body 11 to the crotch pad P'.

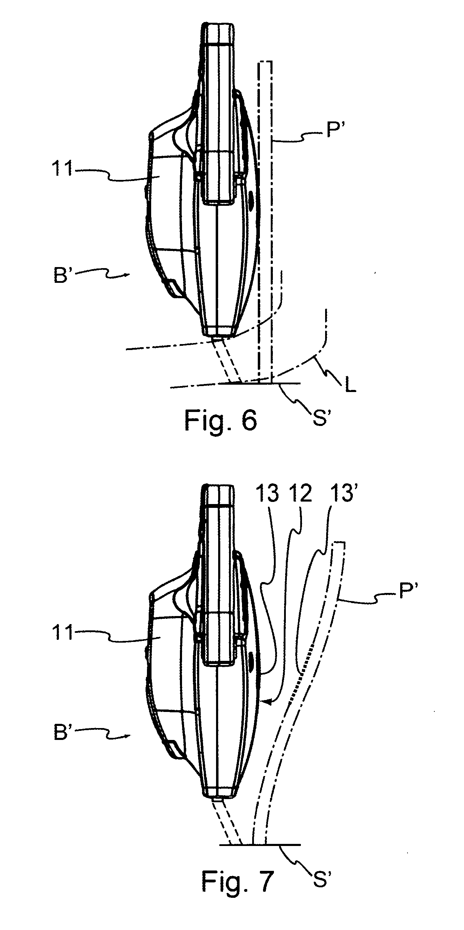

In one embodiment, the attachment means 13 of the buckle B' comprises a hook-and-loop fabric (Velcro) suitable for detachable attachment to a corresponding surface 13' (as indicated by a dotted portion in Fig. 7) of the crotch pad P'. In order to enable attachment of the attachment means 13 to the crotch pad P', at least a portion of the surface 13' of the crotch pad P' should have a corresponding hook-and-loop structure. An advantage of this structure is that the belt buckle B' may easily be attached directly to the crotch pad P'.

Alternatively, the attachment means 13 of the safety belt buckle B' may comprise a snap fastener for releasable attachment to a corresponding means of the crotch pad P' (not shown). An advantage of this is that the attachment means 13 may be fastened to the crotch pad P' irrespectively of what material the crotch pad P' is made of, as long as the crotch pad P' is fitted with means for receiving the snap fastener.

In one embodiment, the attachment means 13 of the safety belt buckle is integrated in the body 11. An advantage of this is that the attachment means 13 may be manufactured in a single step, without the need for separately mounting the attachment means 13 to the body 11.

Alternatively, the attachment means 13 of the safety belt buckle B' may be fastened to the body 11. An advantage of this is that the attachment means 13 may be replaced.

The crotch pad P' may be pivotally attached to the seat. An advantage of this is that the crotch pad is docile in relation to the buckle B'. The crotch pad P' may also be detached from the seat S', as long at it is substantially protruding from the seat S' towards the buckle B'.

Preferably, the crotch pad P' is made of a flexible material. An advantage of this is that the crotch pad P' is docile in relation to the buckle B'.

The crotch pad P' may be padded. An advantage of this is that the crotch pad P' will provide good protection from the buckle B', for the person using the seat.

The above features may be applied singly or in combination.

In an aspect, a safety belt assembly comprises at least one buckle B' as described above. An advantage of this is that the safety belt assembly is easy to use since the crotch pad P' is detachably attached to the buckle B' and thus does not dislocate.

In another aspect, a vehicle seat, preferably a child seat, comprises a safety belt assembly as described above. An advantage of this is that the child seat is easy to use, since the crotch pad P' is detachably attached to the buckle B' and thus does not dislocate.

According to yet an aspect, a safety belt assembly is provided which comprises a belt buckle B', a crotch pad P' and first and second corresponding attachment means 13, 13' attached to, or integrated with, the buckle B' and the crotch pad P', respectively. Further, the attachment means 13, 13' are configured to detachably attach the belt buckle B' to the crotch pad P'.

Preferably, the first and second attachment means 13, 13' comprise corresponding hook-and-loop fabric portions. In an alternative, the first and second attachment means 13, 13' comprise corresponding snap fastener parts (not shown) attached to the buckle B' and the crotch pad P', respectively.

The crotch pad P' is preferably made of a flexible material, and in a preferred embodiment the protrusion P' is padded.

In an aspect of the inventive concept, a novel safety belt buckle for a seat is provided. The seat has a crotch pad or protrusion P' in the seating area S' adjacent an attachment region between the safety belt buckle B' and the seat so that the protrusion P' is positioned between the safety belt buckle B' and a person positioned in the seat and held in place in the seat by means of the belt buckle B', with both the protrusion P' and the buckle B' between the legs. Further, the buckle comprises a body 11 with a surface 12 which in use faces the protrusion P'. The body 11 has an attachment portion 13 for attachment of the buckle B' to the protrusion P' of the seat.

## Claims

1. A safety belt buckle for use with a seat (S') having a crotch pad (P'), **characterized in that** the buckle comprises a body (11) having a surface (12) provided with attachment means (13) for detachable attachment of the buckle (B') to the crotch pad (P').

2. A buckle according to claim 1, wherein the attachment means (13) comprises hook-and-loop fabric.

3. A buckle according to claim 1, wherein the attachment means (13) comprises a snap fastener.

4. A buckle according to any one of claims 1-3, wherein the attachment means (13) is integrated with the body (11).

5. A buckle according to any one of claims 1-3, wherein the attachment means (13) is attached to the body (11).

6. A buckle according to any one of claims 1-5, wherein the crotch pad (P') is pivotally attached to the seat (S').

7. A safety belt assembly comprising at least one buckle as claimed in any one of the preceding claims and a plurality of belts configured to be connected to said buckle.

8. A vehicle seat, preferably a child seat, comprising a safety belt assembly as claimed in claim 7.

9. A safety belt assembly comprising a belt buckle according to any of the claims 1-6, a crotch pad (P') and a first and a second corresponding attachment means (13, 13') attached to, or integrated with, the buckle (B') and the crotch pad (P') respectively, wherein the attachment means (13, 13') are suitable for releasably attaching the belt buckle (B') to the crotch pad (P').

## Patentansprüche

1. Eine Sicherheitsgurtschnalle zur Nutzung mit einem Sitz (S'), welcher über ein Schrittpolster (P') verfügt, **dadurch gekennzeichnet, dass** die Schnalle einen Körper (11) umfasst, der eine Oberfläche (12) aufweist, die mit einem Befestigungsmittel (13) zur lösbaren Befestigung der Schnalle (B') an dem Schrittpolster (P') versehen ist.

2. Eine Schnalle nach Anspruch 1, worin das Befestigungsmittel (13) Klettband umfasst.

3. Eine Schnalle nach Anspruch 1, worin das Befestigungsmittel (13) einen Schnappverschluss umfasst.

4. Eine Schnalle nach einem der Ansprüche 1 bis 3, worin das Befestigungsmittel (13) in den Körper (11) integriert ist.

5. Eine Schnalle nach einem der Ansprüche 1 bis 3, worin das Befestigungsmittel (13) an dem Körper (11) befestigt ist.

6. Eine Schnalle nach einem der Ansprüche 1 bis 5, worin das Schrittpolster (P') schwenkbar an dem Sitz (S') befestigt ist.

7. Eine Sicherheitsgurtanordnung, umfassend mindestens eine Schnalle nach einem der vorhergehenden Ansprüche und eine Mehrzahl an Gurten, die dafür ausgelegt sind, mit der Schnalle verbunden zu werden.

8. Ein Fahrzeugsitz, vorzugsweise ein Kindersitz, umfassend eine Sicherheitsgurtanordnung nach Anspruch 7.

9. Eine Sicherheitsgurtanordnung, umfassend eine Gurtschnalle nach einem der Ansprüche 1 bis 6, ein Schrittpolster (P') und ein erstes und ein zweites entsprechendes Befestigungsmittel (13, 13'), welche an der Schnalle (B') beziehungsweise an dem Schrittpolster (P') befestigt oder in diese integriert sind, worin die Befestigungsmittel (13, 13') dafür ausgelegt sind, die Schnalle (B') lösbar an dem Schrittpolster (P') zu befestigen.

## Revendications

1. Boucle de ceinture de sécurité destinée à une utilisation avec un siège (S') comportant une sangle d'entrejambe (P'), la boucle étant **caractérisée en ce qu'**elle comprend un corps (11) comportant une surface (12) pourvue d'un moyen de fixation (13) pour fixation amovible de la boucle (B') à la sangle d'entrejambe (P').

2. Boucle selon la revendication 1, dans laquelle le moyen de fixation (13) comprend une étoffe à boucles et crochets.

3. Boucle selon la revendication 1, dans laquelle le moyen de fixation (13) comprend une attache à bouton-pression.

4. Boucle selon l'une quelconque des revendications 1 à 3, dans laquelle le moyen de fixation (13) est intégré au corps (11).

5. Boucle selon l'une quelconque des revendications 1 à 3, dans laquelle le moyen de fixation (13) est fixé au corps (11).

6. Boucle selon l'une quelconque des revendications 1 à 5, dans laquelle la sangle d'entrejambe (P') est fixée pivotante au siège (S').

7. Ensemble de ceinture de sécurité comprenant au moins une boucle selon l'une quelconque des revendications précédentes, et une pluralité de ceintures conçues pour être reliées à ladite boucle.

8. Siège de véhicule, de préférence siège pour enfant, comprenant un ensemble de ceinture de sécurité selon la revendication 7.

9. Ensemble de ceinture de sécurité comprenant une boucle de ceinture selon l'une quelconque des revendications 1 à 6, une sangle d'entrejambe (P') et des premier et second moyens de fixation correspondants (13, 13') fixés ou intégrés à la boucle (B') et à la sangle d'entrejambe (P'), respectivement, les moyens de fixation (13, 13') étant appropriés pour une fixation amovible de la boucle de ceinture (B') à la sangle d'entrejambe (P').
